# EUROPEAN PATENT SPECIFICATION

(11) **EP 3 934 981 B1**
(45) Date of publication and mention of the grant of the patent: **18.01.2023**
(21) Application number: 20716231.4
(22) Date of filing: 28.02.2020
(51) Int. Cl.: B64F 1/18, H02G 7/00, H02G 1/00, H02G 1/02

(54) **DEVICE, SYSTEM AND METHOD FOR INSTALLING AN AIRCRAFT WARNING MARKER ON A POWER LINE**
VORRICHTUNG, SYSTEM UND VERFAHREN ZUR INSTALLATION EINER FLUGZEUGWARNMARKIERUNG AUF EINER STROMLEITUNG
DISPOSITIF, SYSTÈME ET PROCÉDÉ D'INSTALLATION D'UN REPÈRE D'AVERTISSEMENT D'AÉRONEF SUR UNE LIGNE D'ALIMENTATION

(30) Priority: 04.03.2019 NO 20190296
(43) Date of publication of application: 12.01.2022
(73) Proprietor: Innova AS, 4314 Sandnes (NO)
(72) Inventor: SHARONI, Ilan, 4015 Stavanger (NO)
(74) Representative: Håmsø Patentbyrå AS
(86) International application number: PCT/NO2020/050052
(87) International publication number: WO 2020/180190

(56) References cited:
- EP-A1- 0 468 368
- EP-A2- 0 418 751
- EP-B1- 0 468 368
- WO-A1-92/19033
- US-A- 3 430 325
- US-A1- 2016 023 761

## Description

The invention relates to a system as defined in claim 1 and to a method as defined in claim 10.

Installation of aircraft warning markers (AWMs) on power lines, often in inaccessible areas, has been known to be both difficult and time-consuming. The AWMs, often also referred to as safety or visibility markers, have been installed by means of one or two helicopters and several operators, both for flying the helicopter(s) and for performing the actual installation process. Installation of AWMs involving use of operators at large heights is time- and resource-consuming in addition to the obvious HSE risks involved for the operators.

EP 0 418 751 A1 discloses a device for automated installation of marker balls on overhead lines by means of a helicopter.

It should be noted that by "power line" herein is meant both actual conductor lines as well as ground wires (shield wires, static wires, earth wires etc.) or any other line that is provided in relation to overhead power lines.

The invention has for its object to remedy or to reduce at least one of the drawbacks of the prior art, or at least provide a useful alternative to prior art.

The object is achieved through features, which are specified in the description below and in the claims that follow.

The invention relates to a system according to claim 1.

The system comprises a device which offers a simple and reliable means for connecting an AWM to a power line.

The device is connected to a helicopter that carries the device, with the AWM, to a power line and activate the release mechanism to let the two halves of the AWM being clamped together to a closed position around in the power line. In its simplest form, the release mechanism is activated by supporting the device on the power line so that the lifting force from the helicopter is reduced, whereby the release mechanism may fall down to clamp the two halves of the AWM together to the closed position around the power line. In its simplest form, the two halves of the AWM snap-locks to each other during clamping to be closed together in the closed position. However, in more sophisticated embodiments, as will be disclosed in the following, the device may be provided with a separately powered actuator for locking the two halves together once in the closed position, which may also allow for easy disconnection of the AWM from the power line in case of erroneous positioning or need for maintenance.

In one embodiment the device may further comprise an orientation member adapted to assist in positioning and/or orienting the device relative to the power line prior to clamping the two halves of the aircraft warning markers together. The orientation member may be an elongated guide or rod extending in a vertical direction downwards from the device, so that the elongated rod will come into abutment with the power line prior to landing the device on the power line. In addition or as an alternative, the lower part of the device may be formed as a guide, such as with an inverted V shape or similar, to guide the device towards the correct landing position and orientation on the power line before activating the release mechanism. In one embodiment, the elongated rod may extend in a downwards direction from the lower end of the device, such as from one of legs of the inverted V to further assist in guiding the device to a correct position on the power line.

In one embodiment the device may further comprise a power source, a control unit and one or more sensors for verifying the position and/or orientation of the device and/or the aircraft warning marker relative to the power line. It may be beneficial to verify a correct positioning and orientation of the device and AWM relative to the power line before clamping the two halves together. This may be done by means of one or more sensors adapted to sense the contact or proximity of the power line to one or more points on the device. The one or more sensors may simply be limit switches activated by physical contact with the power line and subsequently by the clamping of the two halves of the AWM together. In one embodiment, the device may comprise an actuator for locking the aircraft warning marker in the closed position, the actuator may be adapted to being powered by the power source and activatable by the control unit based on data received from the one or more sensors. In an embodiment where the clamping of the two halves of the AWM together does not lock the two halves to each other, it may be useful to have an actuator perform the actual locking process after the two halves have be clamped together to a closed position. By operating the actuator based on data received from one or more sensors, it may be safeguarded that the AWM is not locked in an erroneous position or orientation and the device may operate fully autonomously based on the data from the one or more sensors. In one specific embodiment, the actuator may be a torque tool adapted to engage with bolts on the AWM to lock the AWM in the closed position to the power line. T-bolts may provide simple and reliable locking of the AWM while at the same time allowing easy and quick disconnection if needed.

In one embodiment, the device may comprise two sensors for verifying that device has landed correctly on a power line and one sensor for verifying that the aircraft warning marker is in the closed position. By providing at least two sensors, preferably with a distance between along the powerline, it may be possible to verify both correct position and orientation of AWM relative to the power line before clamping the two halves together. At least one sensor may be used to verify that the AWM has been clamped properly together to the closed position around the power line before activating further locking of the AWM and subsequently removal of helicopter with the device. The sensor(s) may simply be limit or micro switches or any other sensors for verifying contact with or proximity to the power line and clamping of the two halves of the AWM

In one embodiment, the device may further comprise a signalling means for transmitting signals to an operator of a helicopter carrying the device, the signals being based on data received from the one or more sensors. This may be useful for having the device fully autonomous while at the same time allowing the helicopter pilot to perform the right manoeuvre at the right time for a reliable installation process. The signals may be visible signals, such as light signals, or it may be other signals, such as sound signals, transmitted from the device to the helicopter. The signals may also be used to indicate if the installation process was successful or if a re-run is needed.

In one embodiment, the device may further comprise a deflection means for deflecting helicopter lifting ropes to avoid entanglement with the power line. This may be useful when the device is placed on the power line, and the lifting ropes extending between the device and the helicopter may become loose/slack. To avoid entanglement with the power line, the deflection means may deflect the lifting ropes away from the device and the power line.

The device is connected to a helicopter by the connection of lifting ropes directly to the release mechanism. The release mechanism is held in an upper/spanned position simply by the lifting force from the helicopter and the weight of the device itself, and the lifting force is relieved to activate the release mechanism when the device lands on the power line and the weight of the device with AWM is at least partially carried by the power line. The release mechanism is hinged to or pivotable around a portion of the device so that gravity acting on the release mechanism may be transferred to a clamping force to clamp the two halves of the AWM together to the closed position around the power line. The release mechanism, to which the lifting ropes/wires may be connected, are formed as wings rotatable to provide a clamping force to clamp the two halves of the AWM together.

In one embodiment, the device may be adapted to connect AWMs to power lines of varying diameters, which will make the device more versatile in that one and the same device may be used for different types of power lines and AWMs. The varying diameters may be accounted for by adjusting the position of the device relative to the power line when the device has landed on the power line. In one embodiment, a plate with an adjustable vertical position may be provided in the contact/abutment points between the device and the power line to be able to adjust the vertical positioning of the power line relative to the device.

The invention also relates to a method according to claim 10.

In the following is described an example of a preferred embodiment illustrated in the accompanying drawings, wherein:
- Fig. 1: shows, in a perspective view, a device according to the invention in first position of use;
- Fig. 2: shows, in a front view, a device according to invention in a second position of use;
- Fig. 3: shows the device from Fig. 2 in a side view;
- Fig. 4: shows the device from Fig. 2 in a top view;
- Fig. 5: shows, in a front view, an embodiment of a device according to the invention in a first position of use;
- Fig 6: shows the device from Fig. 5 in a second position of use;
- Fig. 7: shows, in a perspective view, an aircraft warning marker as used with a device according to the invention;
- Fig. 8: shows an enlarged detail of the aircraft warning marker from Fig. 7;
- Fig. 9: shows an enlarged detail of the device from Fig. 1;
- Fig. 10: shows another enlarged detail of the device from Fig. 1; and
- Fig. 11: shows yet another enlarged detail of the device from Fig. 1.

In the following, the reference numeral 1 will be used to denote a device according to the first aspect of the invention, while reference numeral 10 denotes an aircraft warning marker (AWM) to be installed on a power line. Identical reference numerals will indicate identical or similar features in the drawings. The drawings are shown schematic and simplified and the various features therein may or may not be drawn to scale.

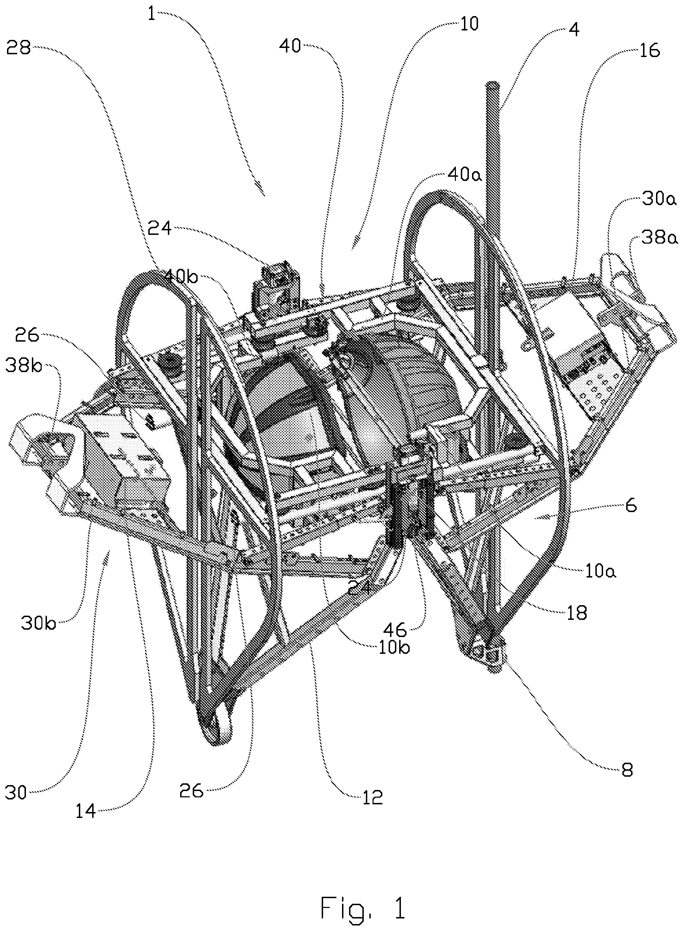

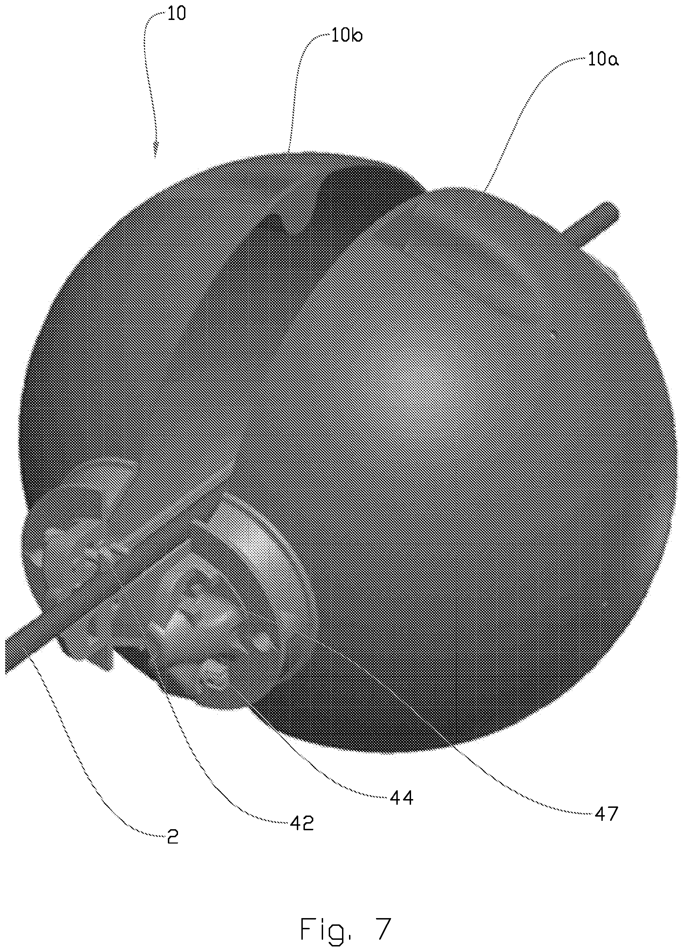

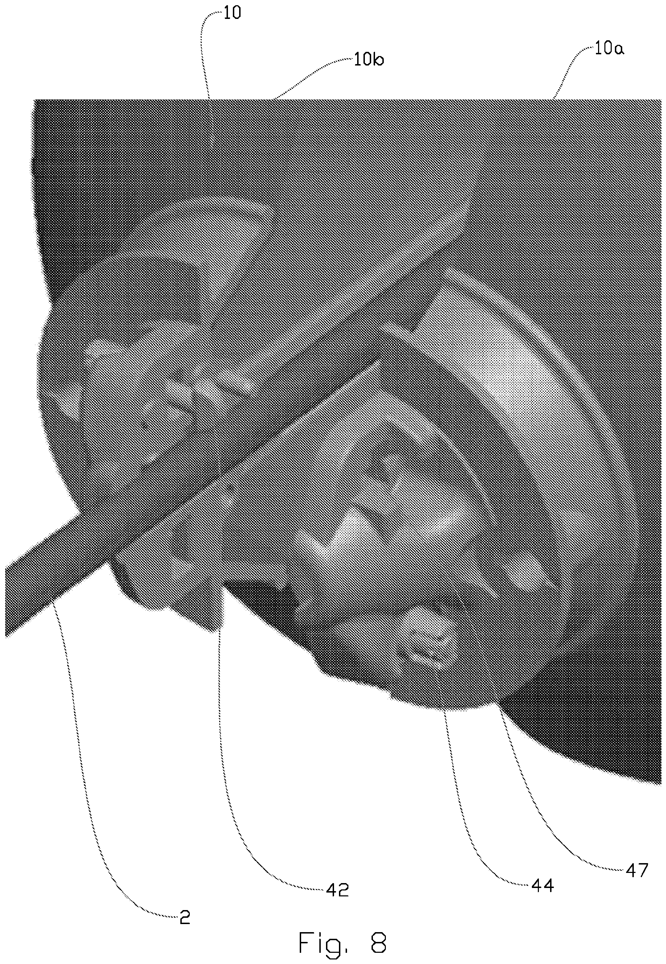

Fig. 1 shows one specific embodiment of a device 1 according to the invention. An AWM 10 is held in the device 1 in an open, non-closed position. Two halves 10a, b of the AWM are held at a distance from each other and may accommodate a (not shown) power line 2 therebetween. Enlarged views of the AWM 10 and power line 2 can been seen on Figs. 7 and 8 and will be discussed in further detail below. The two halves 10a, b of the AWM 10 are positioned in the device 1 so that there is a vertical gap between the halves 10a, b. An orientation member 4, here shown in the form of an elongated rod, is connected to a frame 6 of the device 1 and extends in a substantially vertical direction. Once the device 1 is lifted off ground by a helicopter, the rod 4 will glide downwardly in a bracket 8 in which it is held to extend in a downward vertical direction from the device 1. A not shown abutment will ensure that the rod 4 does not glide through the bracket 8. When the (not shown) helicopter with device 1 suspended from not shown lifting ropes therebelow approaches a power line 2, the rod 4 will come into abutment with the power line 2 to assist in a correct orientation of the device 1 relative to the power line 2. The helicopter may then start lowering the device 1 towards the power line 2, where the power line 2 eventually enters a guide 12, formed as an inverted V, at the lower part of the device 1, the guide 12 ensuring that the device 1 lands correctly on the power line, i.e. with the power line 2 entering into the device 1 in a predictable position and orientation. This predictable position and orientation ensure that the AWM may be closed around the power line 2 in a correct position and orientation. In the shown embodiment, the rod 4 and the inverted V-shaped guide 12 together function as orientation member.

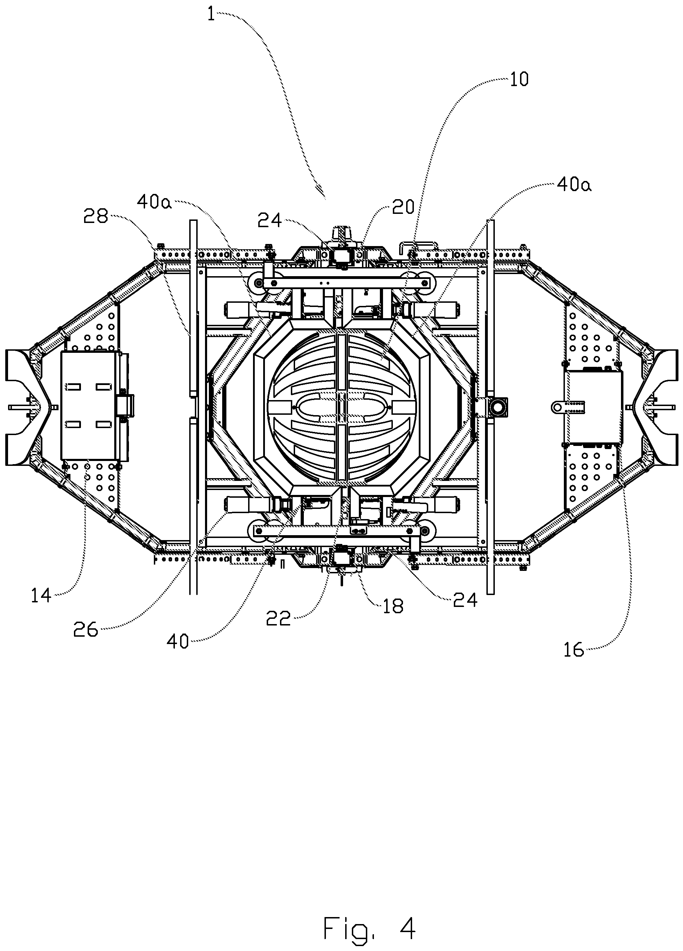

The device 1 is further provided with a power source 14, here in the form of a rechargeable 36V, 15A lithium battery. A control unit 16 is programmed to act on data received from three different sensors 18, 20, 22 in the form of limit switches, as indicated in Fig. 4. Two limit switches 18, 20 are provided to indicate if the device 1 has landed in a correct position and orientation on the power line 2, while the third limit switch 22 is provided to indicate if the two halves 10a, b of the AWM 10 have been clamped together. The device 1 is further provided with signalling means 24 in the form of lights of at least two different colours that will be visible for the pilot/operator of the helicopter to check the status of the installation process. The control unit 16 operates in a closed loop with the sensors 18, 20, 22, signalling means 24 and an actuator 26, here in the form of a torque tool for locking the two halves 10a, b of the AWM 10 together, as will be explained in the following. The device 1 is thereby adapted to complete the installation process of the AWM 10 to the power line 2 fully autonomously once the helicopter has landed the device 1 on the power line 2.

A deflection means 28, here shown in the form of a pair of droplet-shaped frames, are provided to deflect slack lifting ropes/slings away from the device 1 and to avoid entanglement with the power line 2.

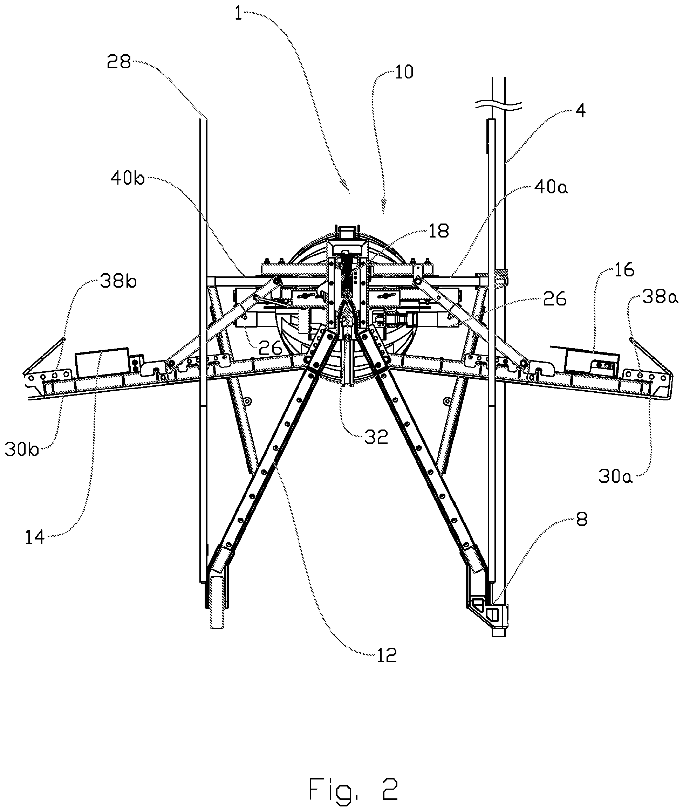

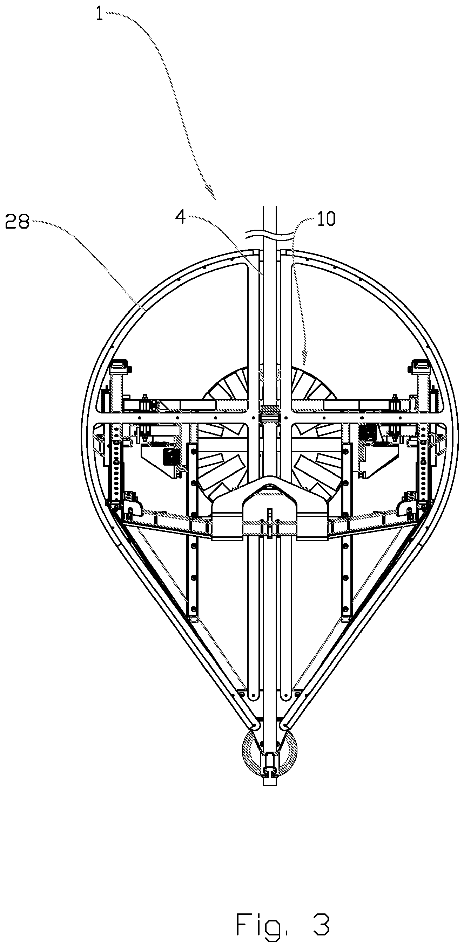

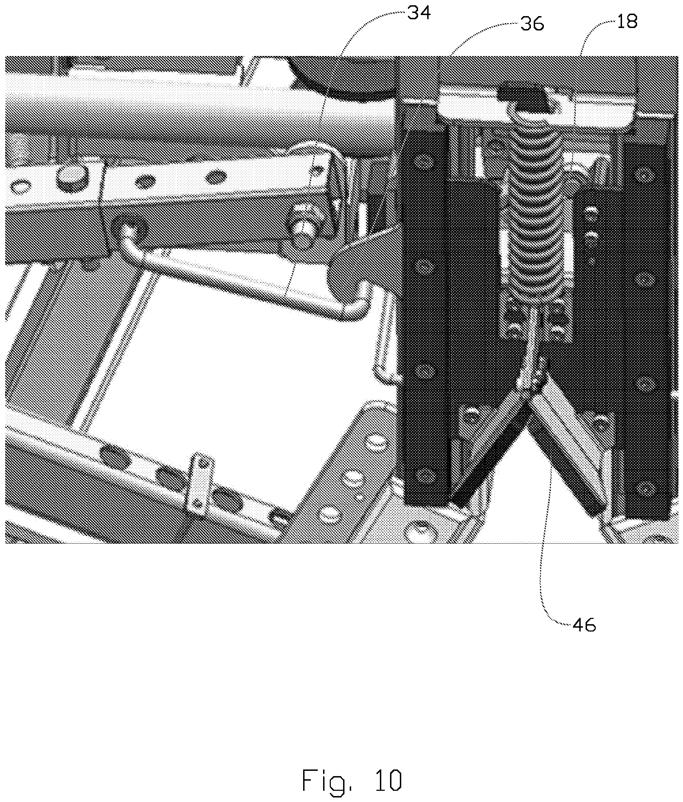

A release mechanism 30 is provided that is adapted to clamp the two halves 10a, b of the AWM 10 together simply by means of gravity. Here the release mechanism 30 is shown as a pair of wings 30a, b pivotable about a central rotation axis 32 of the device 1, the central rotation axis 32 coinciding substantially with the length axis of the power line 2 when the device 1 has landed thereon. Before the AWM 10 is loaded into the device 1 on the ground, the wings 30a, b may be lifted and locked in a raised position by means of a hinge 34 engaged with hook 36, as shown in Fig. 10. Lifting eyes 38a, b on the wings 30 a, b connect the wings 30a, b directly to not shown lifting/rope slings connectable to the helicopter. When the helicopter lifts the device 1 by connecting the lifting slings to the wings 30a, b, the wings 30a, b that were already locked an the upper position, is lifted/pivoted a short distance higher, whereby the hinges 34 fall out of engagement with the hooks 36 and will be kept spanned in the upper position simply of its own weight carried by the helicopter. When the device 1 is subsequently landed on the power line 2, the wings 30a, b fall down under their own weight. Figs. 2-4 and 6 show the wings 30a,b in a lower position after they have fallen down and closed the AWM 10 around the power line. The wings 30a, b are mechanically connected to an inner frame 40 of the device 1 to which the two halves 10a, b of the AWM 10 are connected. Two halves 40a, b of the inner frame 40 are displaced horizontally towards each other upon lowering of the wings 30a, b as pivoting of the wings 30a, b around the rotation axis 32 is converted into horizontal movement of the two halves 40a, b of the inner frame 40.

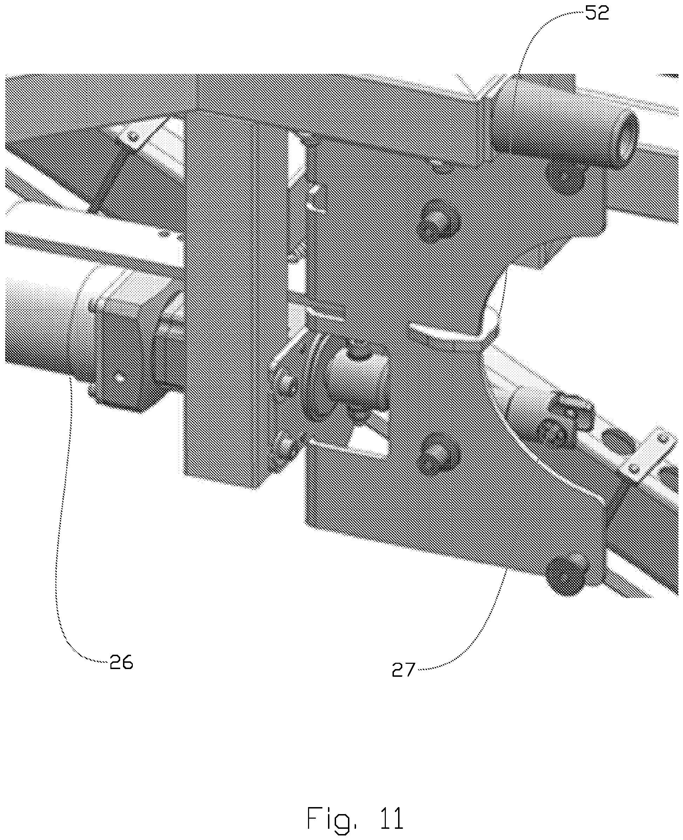

The torque tools 26 are adapted to lock and torque the two halves 10a, b of the AWM 10 together by rotating and torqueing T-bolts 42 provided on one half 10 a, b of the AWM 10 to the other one of the halves 10 a, b. Two pairs of T-bolts 42 are provided, one pair on each of the two halves 10a, b of the AWM 10. The distal ends of the T-bolts fit in complementary fitting recesses 47 in the other one of the halves 10a, b of the AWM 10. Heads 44 of the T-bolts fit complementary to engagement heads 27 on the torque tools 26, as indicated in Fig. 11.

A spring-loaded rubber brake 46 is provided at the top of the each of the V-shaped guides 12. The brake 46 is adapted dampen the landing of the device 1 onto the power line 2. The limit switches 18, 20 are activated once the device 1 has landed on the power line 2 and the weight of the device 1 has overcome the loaded spring, as best seen in Fig. 10.

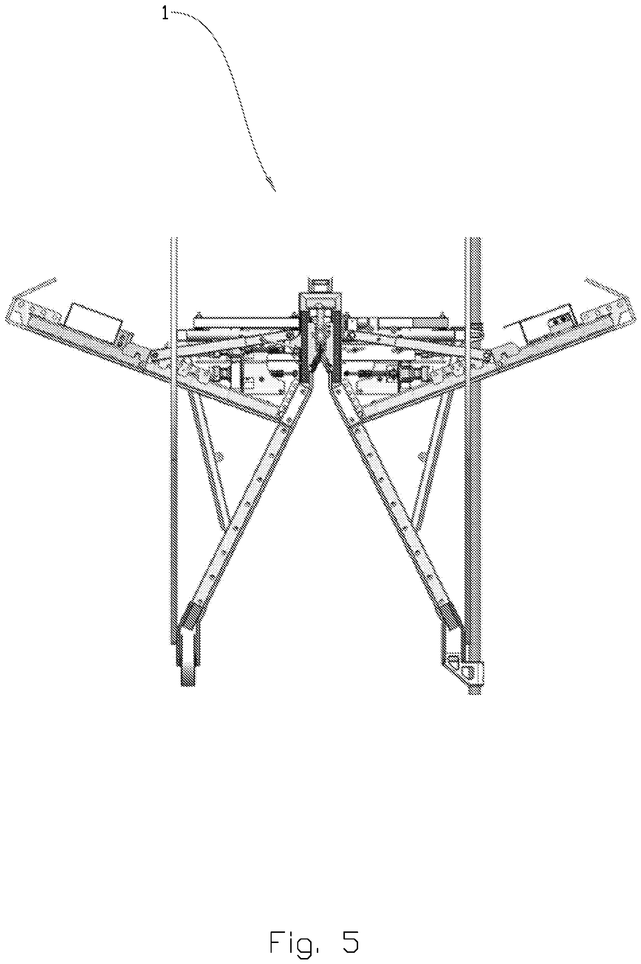

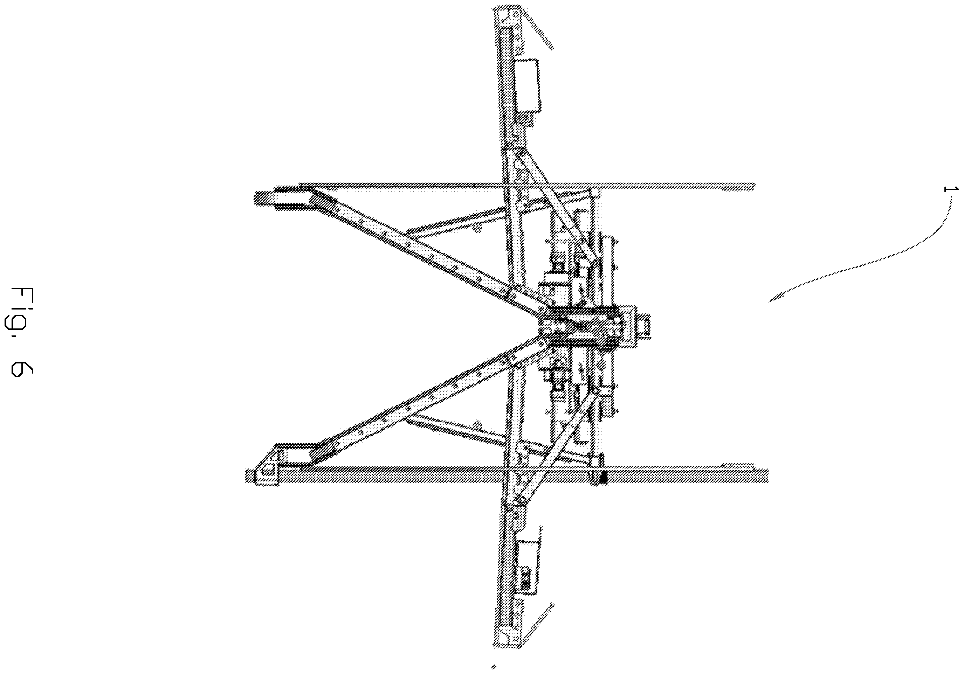

Figs. 5 and 6 show, for simplicity, the device 1 without the deflection means 28 and the AWM 10. In Fig. 5, the device 1 is shown in a first, open position corresponding to the position in which the AWM 10 is placed into the device 1 and flown to the power line 2. Fig. 6 shows the device 1 in a second, closed position, corresponding to the position when the two halves 10a, b of the AWM 10 have been clamped together to a closed position around the power line 2.

Some further details of one embodiment of an AWM 10 are shown in Figs. 7 and 8, wherein the two halves 10a, b are shown at a distance from each other with the power line 2 therebetween before clamping is initiated. The T-bolts 42 are also shown adapted to mate with complementary fitting recesses 47 on the other half of the AWM 10. The heads 44 of the T-bolts are rotatable by means of complementary fitting engagement members 27 of the torque tool 26.

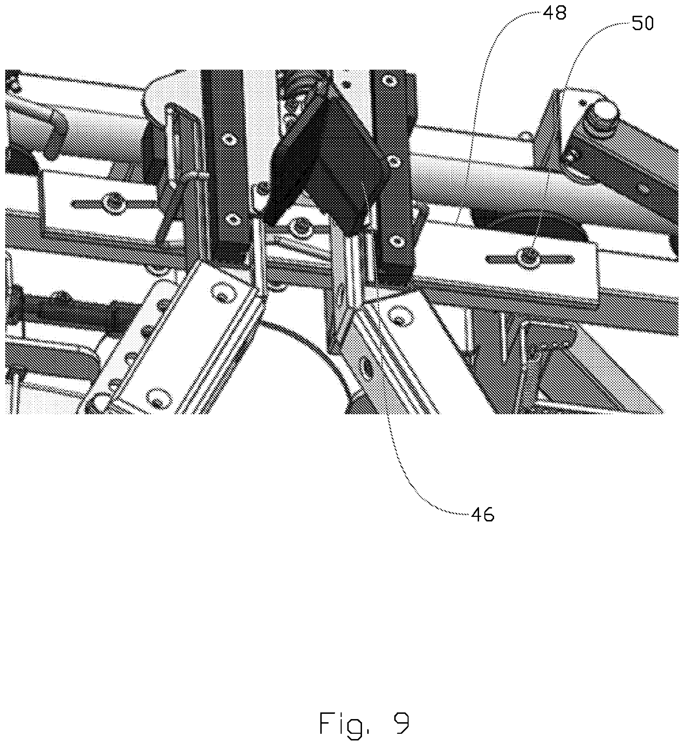

In Fig. 9 the spring-loaded rubber brake 46 is shown together with a plate 48 which vertical position may be adjusted by loosening of bolts 50. When the bolts 50 have been loosened, the plate may be re-positioned whereafter the plate 48 may be locked again in the new position. Adjustment of the plate 48 enables use of the device 1 with power lines 2 of varying diameters since the center of the power line 2, along the axial direction thereof, may be adjusted to match the centre of the AWM 10 for different types of power lines 2.

In Fig. 11, the head 27 of the torque tool 26 can been seen, here provided as a socket with click-function to securely hold a not shown nut/bolt or similar for mating with the head 44 of the T-bolt 42. One out of four spring-loaded lock arms 52 is shown, connected to the inner frame 40 of the device 1, that is adapted to engage with not shown complementary fitting recess on the AWM 10 to secure the AWM 10 to the device 1 during helicopter transport to the power line 2. Once the two halves 10a, b of the AWM 10 are clamped and subsequently torqued together, the lock arms 52 will be moved out of engagement with the not shown recesses in the AWM 10, and once the torque tools 26 have been retracted from engagement with the heads 44 of the T-bolts 42, the device 1 is free to be moved away from the AWM 10 which is now securely connected to the power line 2. The device 1 may thereafter be transported back to the ground to be re-loaded with a new AWM 10.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements.

## Claims

1. System for connecting an aircraft warning marker (10) to a power line (2), the system including
- two halves of an aircraft warning marker;
- a device (1) comprising a release mechanism (30) adapted to clamp the two halves (10a, 10b) of the aircraft warning marker (10) together to a closed position around the power line (2), wherein the system further comprises a helicopter connected to the device (1) and adapted to carry the device and to position the device on the power line (2), **characterised in that**
- the device is connected to the helicopter by the connection of lifting ropes directly to the release mechanism; and
- the release mechanism being hinged to or pivotable around a portion of the device so that when the device lands on the power line, gravity acting on the release mechanism is transferred to a clamping force to clamp the two halves of the aircraft warning marker to a closed position around the power line.

2. System according to claim 1, wherein the device (1) further comprises an orientation member (4, 12) adapted to assist in positioning and/or orienting the device (1) relative to the power line (2) prior to clamping the two halves (10a, 10b) of the aircraft warning marker (10) together.

3. System according to claim 1 or 2, wherein the device (1) further comprises a power source (14), a control unit (16) and one or more sensors (18, 20, 22) for verifying the position and/or orientation of the device (1) and/or the aircraft warning marker (10) relative to the power line (2).

4. System according to claim 3, wherein the device (1) further comprises an actuator (26) for locking the aircraft warning marker (10) in the closed position, the actuator (26) adapted to being powered by the power source (14) and activatable by the control unit (16) based on data received from the one or more sensors (18, 20, 22).

5. System according to claim 4, wherein the actuator is a torque tool (26) adapted to engage with bolts (42) on the aircraft warning marker (10) to lock the aircraft warning marker (10).

6. System according to claim 4 or 5 where the device (1) comprises two sensors (18, 20) for verifying that device (1) has landed correctly on a power line (2) and one sensor (22) for verifying that the aircraft warning marker (10) is in the closed position.

7. System according to any one of the claims 3-6, wherein the device (1) further comprises signalling (24) means for transmitting signals to an operator of a helicopter carrying the device (1), the signals being based on data received from the one or more sensors (18, 20, 22).

8. System according to any one of the preceding claims, wherein the device (1) further comprises a deflection (28) means for deflecting helicopter lifting ropes to avoid entanglement with the power line (2).

9. System according to any one of the preceding claims, wherein the device (1) is adjustable to varying power line diameters.

10. Method for connecting an aircraft warning marker (10) to a power line (2) by means of a system according to any one of the preceding claims, the method comprising the steps of:
- connecting the two halves (10a, 10b) of the aircraft warning marker 10 to the device (1);
- connecting the device (1) to the helicopter;
- flying the helicopter, carrying the device (1), towards the power line (2);
- positioning the device (1), by means of the helicopter, on the power line so that the power line (2) is positioned between the two halves (10a, 10b) of the aircraft warning marker (10);
- activating the release mechanism (30) by supporting the device on the power line and lowering the helicopter towards the power line so that gravity acting on the release mechanism is transferred to a clamping force to clamp the two halves (10a, 10b) of the aircraft warning marker (10) together to a closed position around the power line (2) by means of gravity.

11. Method according to claim 10, wherein the method, prior to activating the release mechanism (30a, 30b), includes the steps of:
- sensing, by means of one or more sensors (18, 20, 22), the position and/or orientation of the device (1) and/or the aircraft warning marker (10) relative to the power line (2); and
- transmitting, by means of signalling means (24), signals to the operator of the helicopter based on data received from the one or more sensors (18, 20, 22).

12. Method according to claim 10 or 11, wherein the method further comprises the step of locking the aircraft warning marker (10) in the closed position around the power line (2) after the release mechanism (30a, 30b) has been activated.

## Patentansprüche

1. System zum Anschließen einer Flugzeugwarnmarkierung (10) an eine Stromleitung (2), wobei das System Folgendes umfasst
- zwei Hälften einer Flugzeugwarnmarkierung;
- eine Vorrichtung (1), umfassend einen Auslösemechanismus (30), der so beschaffen ist, dass er die beiden Hälften (10a, 10b) der Flugzeugwarnmarkierung (10) in einer geschlossenen Position um die Stromleitung (2) herum zusammenfügt, wobei das System ferner einen Hubschrauber umfasst, der mit der Vorrichtung (1) verbunden und so beschaffen ist, dass er die Vorrichtung trägt und die Vorrichtung auf der Stromleitung (2) positioniert, **dadurch gekennzeichnet, dass**
- die Vorrichtung mit dem Hubschrauber durch den Anschluss von Hebeseilen direkt mit dem Auslösemechanismus verbunden ist; und
- der Auslösemechanismus an einem Teil der Vorrichtung eingehängt oder um diesen herum schwenkbar ist, sodass, wenn die Vorrichtung auf der Stromleitung aufsetzt, die auf den Auslösemechanismus wirkende Schwerkraft in eine Schließkraft umgewandelt wird, um die beiden Hälften der Flugzeugwarnmarkierung in einer geschlossene Position um die Stromleitung herum zu befestigen.

2. System nach Anspruch 1, wobei die Vorrichtung (1) ferner ein Ausrichtungselement (4, 12) umfasst, das so ausgelegt ist, dass es die Positionierung und/oder Ausrichtung der Vorrichtung (1) in Bezug auf die Stromleitung (2) vor dem Zusammenfügen der beiden Hälften (10a, 10b) der Flugzeugwarnmarkierung (10) unterstützt.

3. System nach Anspruch 1 oder 2, wobei die Vorrichtung (1) ferner eine Stromquelle (14), eine Steuereinheit (16) und einen oder mehrere Sensoren (18, 20, 22) zur Überprüfung der Position und/oder Ausrichtung der Vorrichtung (1) und/oder der Flugzeugwarnmarkierung (10) relativ zur Stromleitung (2) umfasst.

4. System nach Anspruch 3, wobei die Vorrichtung (1) ferner einen Aktuator (26) zum Verriegeln der Flugzeugwarnmarkierung (10) in der geschlossenen Position umfasst, wobei der Aktuator (26) so ausgelegt ist, dass er von der Energiequelle (14) mit Energie versorgt wird und von der Steuereinheit (16) auf Grundlage von Daten, die von dem einen oder mehreren Sensoren (18, 20, 22) empfangen werden, aktiviert werden kann.

5. System nach Anspruch 4, bei dem der Aktuator ein Drehmomentwerkzeug (26) ist, das die Flugzeugwarnmarkierung (10) mit Bolzen (42) erfassen kann, um die Flugzeugwarnmarkierung (10) zu verriegeln.

6. System nach Anspruch 4 oder 5, wobei die Vorrichtung (1) zwei Sensoren (18, 20) umfasst, um zu überprüfen, ob die Vorrichtung (1) korrekt auf einer Stromleitung (2) aufgesetzt hat, und einen Sensor (22), um zu überprüfen, ob sich die Flugzeugwarnmarkierung (10) in der geschlossenen Position befindet.

7. System nach einem der Ansprüche 3 bis 6, wobei die Vorrichtung (1) ferner Signalmittel (24) zur Übertragung von Signalen an einen Bediener eines die Vorrichtung (1) tragenden Hubschraubers umfasst, wobei die Signale auf Daten beruhen, die von dem einen oder mehreren Sensoren (18, 20, 22) empfangen werden.

8. System nach einem der vorangehenden Ansprüche, wobei die Vorrichtung (1) ferner ein Umlenkmittel (28) zum Umlenken von Hebeseilen eines Hubschraubers umfasst, damit sich diese nicht in der Stromleitung (2) verfangen.

9. System nach einem der vorangehenden Ansprüche, wobei die Vorrichtung (1) auf unterschiedliche Leitungsdurchmesser einstellbar ist.

10. Verfahren zum Anschließen einer Flugzeugwarnmarkierung (10) an eine Stromleitung (2) über ein System nach einem der vorangehenden Ansprüche, wobei das Verfahren die folgenden Schritte umfasst:
- Verbinden der beiden Hälften (10a, 10b) der Flugzeugwarnmarkierung (10) mit der Vorrichtung (1);
- Anschließen der Vorrichtung (1) an den Hubschrauber;
- Fliegen des Hubschraubers, der die Vorrichtung (1) trägt, in Richtung der Stromleitung (2);
- Positionieren der Vorrichtung (1) mit Hilfe des Hubschraubers auf der Stromleitung, sodass sich die Stromleitung (2) zwischen den beiden Hälften (10a, 10b) der Flugzeugwarnmarkierung (10) befindet;
- Aktivieren des Auslösemechanismus (30) durch Abstützen der Vorrichtung auf der Stromleitung und Absenken des Hubschraubers in Richtung der Stromleitung, sodass die auf den Auslösemechanismus wirkende Schwerkraft in eine Schließkraft umgewandelt wird, um die beiden Hälften (10a, 10b) der Flugzeugwarnmarkierung (10) durch die Schwerkraft in eine geschlossene Position um die Stromleitung (2) herum zusammenzufügen.

11. Verfahren nach Anspruch 10, wobei das Verfahren vor dem Aktivieren des Auslösemechanismus (30a, 30b) die folgenden Schritte umfasst:
- Erfassen der Position und/oder Ausrichtung der Vorrichtung (1) und/oder der Flugzeugwarnmarkierung (10) relativ zur Stromleitung (2) mit Hilfe eines oder mehrerer Sensoren (18, 20, 22); und
- Übertragen von Signalen an den Bediener des Hubschraubers mit Hilfe von Signalmitteln (24) auf der Grundlage von Daten, die von dem einen oder mehreren Sensoren (18, 20, 22) empfangen wurden.

12. Verfahren nach Anspruch 10 oder 11, wobei das Verfahren ferner den Schritt des Verriegelns der Flugzeugwarnmarkierung (10) in der geschlossenen Position um die Stromleitung (2) herum umfasst, nachdem der Auslösemechanismus (30a, 30b) aktiviert wurde.

## Revendications

1. Système de connexion d'un repère d'avertissement d'aéronef (10) à une ligne d'alimentation (2), le système incluant
- deux moitiés d'un repère d'avertissement d'aéronef ;
- un dispositif (1) comprenant un mécanisme de déverrouillage (30) adapté pour serrer les deux moitiés (10a, 10b) du repère d'avertissement d'aéronef (10) ensemble en position fermée autour de la ligne d'alimentation (2), dans lequel le système comprend également un hélicoptère connecté au dispositif (1) et adapté pour transporter le dispositif et pour positionner le dispositif sur la ligne d'alimentation (2), **caractérisé en ce que**
- le dispositif est connecté à l'hélicoptère par la connexion de câbles de levage directement au mécanisme de déverrouillage; et
- le mécanisme de déverrouillage étant articulé à ou pouvant pivoter autour d'une partie du dispositif afin que lorsque le dispositif se pose sur la ligne d'alimentation, la gravité agissant sur le mécanisme de déverrouillage soit transférée à une force de serrage pour serrer les deux moitiés du repère d'avertissement d'aéronef en position fermée autour de la ligne d'alimentation.

2. Système selon la revendication 1, dans lequel le dispositif (1) comprend également un membre d'orientation (4, 12) adapté pour aider au positionnement et/ou à l'orientation du dispositif (1) par rapport à la ligne d'alimentation (2) avant le serrage des deux moitiés (10a, 10b) du repère d'avertissement d'aéronef (10) ensemble.

3. Système selon la revendication 1 ou 2, dans lequel le dispositif (1) comprend également une source d'alimentation (14), une unité de contrôle (16) et un ou plusieurs capteurs (18, 20, 22) pour vérifier la position et/ou l'orientation du dispositif (1) et/ou du repère d'avertissement d'aéronef (10) par rapport à la ligne d'alimentation (2).

4. Système selon la revendication 3, dans lequel le dispositif (1) comprend également un actionneur (26) pour verrouiller le repère d'avertissement d'aéronef (10) en position fermée, l'actionneur (26) étant adapté pour être alimenté par la source d'alimentation (14) et pouvant être activé par l'unité de contrôle (16) reposant sur des données reçues à partir d'un ou de plusieurs capteurs (18, 20, 22).

5. Système selon la revendication 4, dans lequel l'actionneur est un outil de réglage torque (26) adapté pour s'engager avec des boulons (42) sur le repère d'avertissement d'aéronef (10) pour verrouiller le repère d'avertissement d'aéronef (10).

6. Système selon la revendication 4 ou 5, dans lequel le dispositif (1) comprend deux capteurs (18, 20) pour vérifier que le dispositif (1) s'est posé correctement sur une ligne d'alimentation (2) et un capteur (22) pour vérifier que le repère d'avertissement d'aéronef (10) est dans la position fermée.

7. Système selon l'une quelconque des revendications 3-6, dans lequel le dispositif (1) comprend également des moyens de signalement (24) pour transmettre des signaux à un opérateur d'hélicoptère transportant le dispositif (1), les signaux reposant sur des données reçues à partir d'un ou de plusieurs capteurs (18, 20, 22).

8. Système selon l'une quelconque des revendications précédentes, dans lequel le dispositif (1) comprend également un moyen de déviation (28) pour dévier les câbles de levage de l'hélicoptère pour éviter tout emmêlement avec la ligne d'alimentation (2).

9. Système selon l'une quelconque des revendications précédentes, dans lequel le dispositif (1) est ajustable en fonction de divers diamètres de ligne d'alimentation.

10. Procédé de connexion d'un repère d'avertissement d'aéronef (10) à une ligne d'alimentation (2) à l'aide d'un système selon l'une quelconque des revendications précédentes, le procédé comprenant les étapes de :
- connecter les deux moitiés (10a, 10b) du repère d'avertissement d'aéronef (10) au dispositif (1) ;
- connecter le dispositif (1) à l'hélicoptère ;
- faire voler l'hélicoptère, transportant le dispositif (1), vers la ligne d'alimentation (2) ;
- positionner le dispositif (1), à l'aide de l'hélicoptère, sur la ligne d'alimentation de manière que la ligne d'alimentation (2) soit positionnée entre les deux moitiés (10a, 10b) du repère d'avertissement d'aéronef (10) ;
- activer le mécanisme de déverrouillage (30) en maintenant le dispositif sur la ligne d'alimentation et en baissant l'hélicoptère vers la ligne d'alimentation de manière que la gravité agissant sur le mécanisme de déverrouillage soit transférée à une force de serrage pour serrer les deux moitiés (10a, 10b) du repère d'avertissement d'aéronef (10) ensemble en position fermée autour de la ligne d'alimentation (2) par la gravité.

11. Procédé selon la revendication 10, dans lequel le procédé, avant l'activation du mécanisme de déverrouillage (30a, 30b), inclut les étapes de :
- capter, à l'aide d'un ou de plusieurs capteurs (18, 20, 22), la position et/ou l'orientation du dispositif (1) et/ou du repère d'avertissement d'aéronef (10) par rapport à la ligne d'alimentation (2) ; et
- transmettre, à travers des moyens de signalement (24), des signaux à l'opérateur de l'hélicoptère reposant sur des données reçues à partir d'un ou de plusieurs capteurs (18, 20, 22).

12. Procédé selon la revendication 10 ou 11, dans lequel le procédé comprend également l'étape de verrouiller le repère d'avertissement d'aéronef (10) dans la position fermée autour de la ligne d'alimentation (2) après que le mécanisme de déverrouillage (30a, 30b) ait été activé.
